# EUROPÄISCHE PATENTSCHRIFT

(11) **EP 2 965 607 B1**
(45) Veröffentlichungstag und Bekanntmachung des Hinweises auf die Patenterteilung: **24.06.2020**
(21) Anmeldenummer: 15401067.2
(22) Anmeldetag: 06.07.2015
(51) Int. Cl.: A01C 7/20

(54) **SÄMASCHINE**
SOWING MACHINE
SEMOIR

(30) Priorität: 09.07.2014 DE 102014109565
(43) Veröffentlichungstag der Anmeldung: 13.01.2016
(73) Patentinhaber: Amazonen-Werke H. Dreyer GmbH & Co. KG, 49205 Hasbergen (DE)
(72) Erfinder: Helms, Helge, 26125 Oldenburg (DE)

(56) Entgegenhaltungen:
- WO-A1-2008/048178
- US-A- 5 065 681
- US-A- 5 398 771

## Beschreibung

Die vorliegende Erfindung betrifft eine Sämaschine gemäß Oberbegriff von Anspruch 1 und ein Verfahren zum Betreiben einer Sämaschine gemäß Oberbegriff des Anspruchs 8.

Eine gattungsgemäße Sämaschine ist in der US 5 065 681 A beschrieben.

Durch die WO 2008/048178A1 ist eine weitere Sämaschine bekannt. Bei dieser Sämaschine sind die Säschare über einen Blattfeder an einem um seine Längsachse mittels eines Hydraulikzylinders verdrehbaren Scharbalken angeordnet. Durch das Verdrehen des quer zur Fahrtrichtung verlaufenden Scharbalkens durch den Hydraulikzylinder können Säschare ausgehoben, abgesenkt und mit einem Schardruck gegen den Boden beaufschlagt werden.

Eine weitere Vorrichtung ist beispielsweise aus der EP 1 634 489 B1 bekannt. Die Sämaschine kann einen variablen Schardruck erzeugen und die Säschare zum Zweck eines platzsparenden Transports aus der Arbeitsstellung in eine Transportstellung heben. Dazu umfasst die Sämaschine einen Scharbalken, der mittels eines motorischen Stellelements verschwenkt werden kann, womit der Schardruck an den Säscharen eingestellt werden kann. Die motorischen Stellelemente können dabei als doppelwirkende Hydraulikzylinder ausgebildet sein. Der maximale Hub und somit der maximale Schardruck kann über einen Anschlag an dem Hydraulikzylinder eingestellt werden. Zum Ausheben der Säschare aus der Arbeitsstellung in eine Transportstellung ist ein weiterer doppeltwirkender Hydraulikzylinder vorgesehen, der den gesamten Rahmen, an dem sowohl die Säschare als auch der Scharbalken befestigt sind, aus der Arbeitsstellung in die Transportstellung überführen kann. Hierbei sind die Säschare an dem Scharbalken angelenkt.

Diese Sämaschine ist konstruktiv aufwendig, was einen hohen Wartungsaufwand mit sich bringt.

Ausgehend vom Stand der Technik ist es daher Aufgabe der vorliegenden Erfindung, eine verbesserte Schardruckverstellvorrichtung und Scharhubvorrichtung bereitzustellen.

Diese Aufgabe wird durch die erfindungsgemäße Sämaschine gemäß Anspruch 1 und das Verfahren zum Betreiben einer Sämaschine nach Anspruch 8 gelöst. Vorteilhafte Weiterbildungen der Erfindung sind in den Unteransprüchen erfasst.

Die erfindungsgemäße Sämaschine ist dadurch gekennzeichnet, dass die Bewegung des Scharträgers zum Einstellen des Schardrucks und der Scharhub durch eine der Schardruckverstellvorrichtung und der Scharhubvorrichtung gemeinsame Baugruppe bewirkt wird. Durch Vorsehen dieser gemeinsamen Baugruppe kann die Anzahl beweglicher Teile, insbesondere kostspieliger Bauteile, wie Hydraulikzylinder, reduziert werden, was die Kosten der Sämaschine senkt. Gleichzeitig wird aber auch der Wartungsaufwand der Sämaschine durch weniger mechanische Teile geringer, was die Produktivität der Sämaschine insgesamt erhöht.

Die Scharhubvorrichtung umfasst einen zweiten Balken, wobei der zweite Balken beweglich gelagert ist und eine Bewegung des Balkens durch die gemeinsame Baugruppe ein Anheben des Scharträgers bewirken kann.

Der Verstellhebel in einem Bereich um den zweiten Balken zum Einstellen des Schardrucks drehbar ist, wobei eine Begrenzung des Bereichs der Anschlag bildet. Somit werden Fehlerquellen, die bei der Einstellung des Schardrucks durch Veränderung der Lage des zweiten Balkens auftreten können, minimiert.

Es ist so möglich, dass der zweite Balken bei einer Veränderung des Schardrucks nicht mitbewegt wird, was die Genauigkeit bei der Einstellung des Schardrucks erhöht. Nur zum Zwecke des Aushebens der Säschare in die Transportstellung wird dieser zweite Balken bewegt.

In einer Ausführungsform der Erfindung umfasst die gemeinsame Baugruppe wenigstens einen Zylinder, der mit wenigstens je einer Baugruppe der Scharhubvorrichtung und der Schardruckverstellvorrichtung verbunden ist. Durch diese Verbindung erlaubt der Zylinder sowohl die Einstellung des Schardrucks als auch das Ausheben der Säschare.

In einer Weiterbildung dieser Ausführungsform ist die Sämaschine dadurch gekennzeichnet, dass der Zylinder als pneumatischer Zylinder, als hydraulischer Zylinder oder als elektrischer Linearmotor ausgebildet ist. Je nach erforderlicher Leistung des Zylinders kann so der passende Zylinder ausgewählt werden.

Weiterhin kann vorgesehen sein, dass der Zylinder über ein bewegliches Gelenk, umfassend einen Verstellhebel und einen beweglich mit diesem verbundenen Abstandshebel, mit der Scharhubvorrichtung und der Schardruckverstellvorrichtung verbunden ist, wobei das Gelenk und der Zylinder die gemeinsame Baugruppe bilden. Es ist so auf konstruktiv einfache Weise möglich, mit dieser gemeinsamen Baugruppe zum Einen die Einstellung des Schardrucks und zum anderen das Ausheben der Säschare zu ermöglichen.

In einer Weiterbildung umfasst die Schardruckverstellvorrichtung einen ersten, drehbar gelagerten Balken, an dem mit den Säscharen verbundene Federelemente angeordnet sind.

Ferner ist vorgesehen, dass der erste Balken mit dem Abstandshebel des Gelenks verbunden ist, wobei eine Bewegung des Gelenks durch den Zylinder eine Veränderung des Schardrucks bewirken kann. Da die Bewegung des Gelenks mittels beispielsweise des Zylinders direkt durch Drehung des Balkens in eine Veränderung des Schardrucks überführt wird, kann hier auf unmittelbare Art und Weise durch Einstellung der Position des Zylinders der Schardruck beeinflusst werden.

Vorteilhaft ist, wenn der zweite Balken einen zweiten Anschlag umfasst, wobei der Verstellhebel zur Einstellung des Schardrucks zwischen dem Anschlag und dem zweiten Anschlag um den zweiten Balken drehbar ist. Durch Vorgeben des möglichen Bewegungsbereichs zwischen dem ersten Anschlag und dem zweiten Anschlag kann so der minimale und maximale Schardruck auf mechanische Weise vorgegeben werden, was komplizierte elektronische Ansteuerungen überflüssig macht bzw. diese können weniger aufwendig ausfallen, was die Kosten der Sämaschine weiter reduzieren kann.

Das erfindungsgemäße Verfahren zum Betreiben einer Sämaschine ist dadurch gekennzeichnet, dass der Scharhub und das Einstellen des Schardrucks durch eine gemeinsame Baugruppe bewirkt werden. Mit diesem Verfahren werden die Vorteile der erfindungsgemäßen Sämaschine umgesetzt.

In einer Ausführungsform der Erfindung erfolgt eine Veränderung des Schardrucks durch Drehung eines mit einem Gelenk der gemeinsamen Baugruppe verbundenen ersten Balkens, wobei die Drehung des Balkens in eine Veränderung des Schardrucks durch mit den Säscharen verbundene Federelemente überführt wird.

Weiterhin kann ein Scharhub durch Bewegung eines mit einem Gelenk der gemeinsamen Baugruppe verbundenen zweiten Balkens erfolgen, wobei das Gelenk den zweiten Balken durch Bewegung gegen einen Anschlag des Balkens anhebt.

In einer Weiterbildung dieser Ausführungsform wird bei Veränderung des Schardrucks das Gelenk um einen von dem Anschlag begrenzten Bereich des zweiten Balkens gedreht.

Weiterhin kann das erfindungsgemäße Verfahren dadurch gekennzeichnet sein, dass das Gelenk zwischen dem Anschlag und einem zweiten Anschlag des zweiten Balkens drehbar ist, wobei der Schardruck in Abhängigkeit der Position des Gelenks in Relation zum ersten und zweiten Anschlag eingestellt wird.
- Fig. 1 und b: zeigt eine erfindungsgemäße Sämaschine gemäß einer Ausführungsform bei unterschiedlichen Scharpositionen.
- Fig. 2a-c: zeigen eine erfindungsgemäße Sämaschine bei unterschiedlichem Schardruck.
- Fig. 3a-c: zeigen die Sämaschine beim Ausheben der Säschare bis in die Transportstellung.

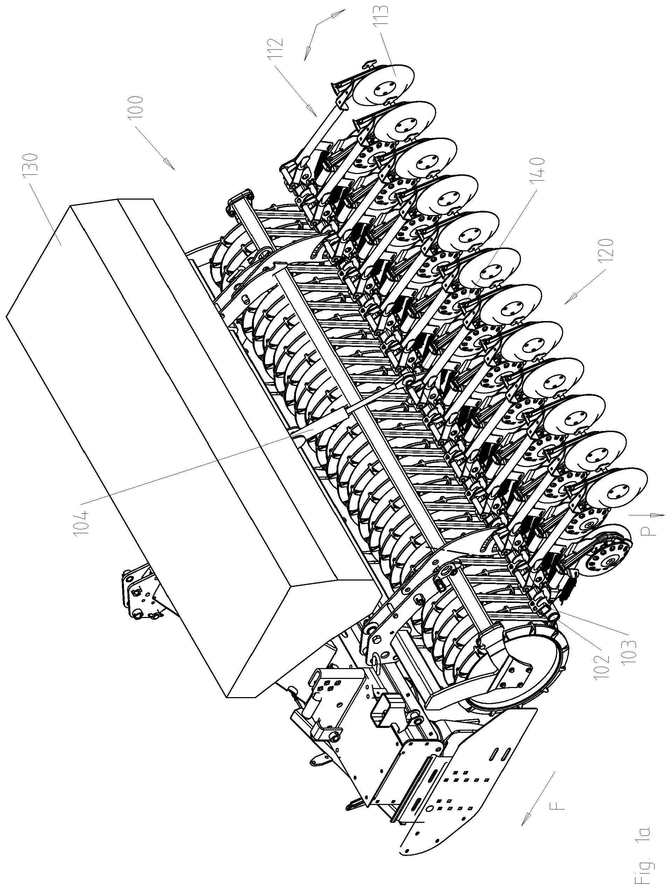

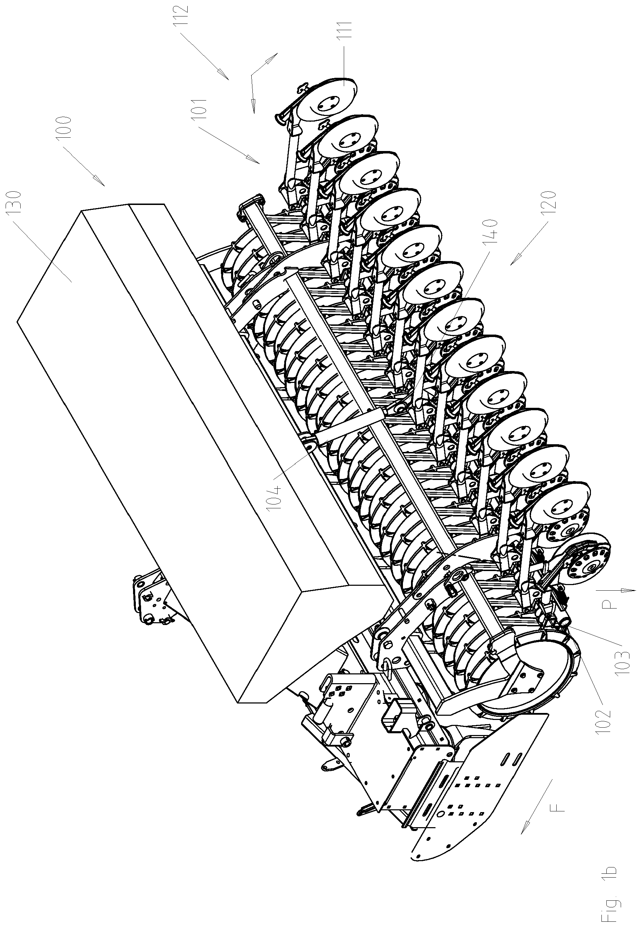

Fig. 1a und 1b zeigen eine erfindungsgemäße Sämaschine 100 gemäß einer Ausführungsform, wobei die Fig.1a die Sämaschine mit in Arbeitsstellung abgesenkten Säscharen 112 und die Fig.1b die Sämaschine mit in Transportund/oder Wendestellung angehobenen Säscharen 112 zeigt. Die Sämaschine 100 umfasst einen Scharträger 101, an dem mehrere Säschare 112, die zusammen die Säschargruppe 120 ergeben, angeordnet sind. Diese Säschare können in bekannter Weise, beispielsweise aus dem Saatgutbehälter 130, ausgebrachtes Saatgut in die Erde auf einem zu bearbeitenden Feld einbringen. Um ein Einbringen des Saatguts in die angemessene Tiefe des Bodens zu gewährleisten, wird der Druck (Schardruck) p, den die Säschare 120 auf den Boden ausüben, in Abhängigkeit der zu erzielenden Saatguttiefe, aber auch in Abhängigkeit von anderen Bedingungen, wie beispielsweise der Bodenhärte, eingestellt. Dazu ist eine Schardruckverstellvorrichtung 102 vorgesehen, die beispielsweise über ein entsprechendes Federelement eine Bewegung in eine Veränderung des Schardrucks P, der an den Säscharen anliegt, einstellen kann. Die Schardruckverstellvorrichtung ist dabei beispielsweise als drehbarer, quer zur Fahrtrichtung F angeordneter Balken ausgebildet, der mit Hilfe des dargestellten Zylinders 104 und eines Gelenks 140 verdreht werden kann. Diese Drehung wird dann in eine Veränderung des Schardrucks, beispielsweise über ein Federelement oder ein Gelenk oder Ähnliches übersetzt.

Weiterhin kann der Scharträger 101 und somit die Säschare 112 der Säschargruppe 120 zwischen zwei Stellungen, nämlich der Arbeitsstellung 113 und der Transportstellung 111 bewegt werden, wie weiter unten noch erläutert wird. Die Arbeitsstellung 113 ist die Stellung, in der die Säschare den Boden mit gegebenenfalls unterschiedlichem Druck während der Bearbeitung berühren. Die Transportstellung 111 hingegen ist diejenige, in der der Scharträger 101 und die Säschare 112 sich in einer angehobenen Position befinden und den Boden nicht mehr berühren.

Während hier verschiedene Möglichkeiten der Ausführung der Überführung von der Arbeitsstellung in die Transportstellung bestehen, wie beispielsweise die Säschare nur vertikal zu verschieben, so dass sie den Boden nicht mehr berühren oder ein Anklappen in dem Sinne, dass die Säschare 112 und der Scharträger 101 vertikal bewegt, aber auch um einen bestimmten Winkel gekippt werden, ist es das wesentliche Merkmal der Transportstellung, dass eine Berührung der Säschare mit dem Boden des Feldes nicht mehr erfolgt.

Dazu ist eine Scharhubvorrichtung 103 vorgesehen, die ein Ausheben der Säschare 112 aus der Position 113 in die Position 111 über eine Bewegung des Scharträgers 101 ermöglicht. Diese Scharhubvorrichtung kann als Balken mit beispielsweise einem mehrkantigen Querschnitt ausgebildet sein, der beweglich gelagert ist. Dabei meint diese bewegliche Lagerung sowohl eine Verdrehung als auch eine translatorische Bewegung des Balkens horizontal oder vertikal zum Boden bei Überführung der Säschare aus der Arbeitsstellung 113 in die Transportstellung 111.

Um dies zu bewirken, ist die Scharhubvorrichtung 103 antreibbar, beispielsweise über einen Zylinder.

Dabei ist erfindungsgemäß vorgesehen, dass sowohl die Scharhubvorrichtung 103 als auch die Schardruckverstellvorrichtung 102 beide über die gemeinsame Baugruppe, bestehend aus beispielsweise dem Zylinder 104 und dem Gelenk 140, angetrieben bzw. bewegt werden und zwar derart, dass zum Einen der Schardruck über die Schardruckverstellvorrichtung verändert werden kann und zum Anderen ein Ausheben der Säschare aus der Arbeitsposition in die Transportstellung oder umgekehrt mit Hilfe der Scharhubvorrichtung 103 erfolgt. Vorzugsweise erfolgt dabei die Veränderung des Schardrucks mittels der gemeinsamen Baugruppe und der Schardruckverstellvorrichtung 102 derart, dass die Scharhubvorrichtung 103 selbst (also beispielsweise der entsprechende Balken) nicht bewegt wird. Es kann so verhindert werden, dass die genaue Einstellung des Schardrucks durch die Schardruckverstellvorrichtung 102 durch ein unbeabsichtigtes Anheben der Säschare mittels der Scharhubvorrichtung 103 beeinflusst wird. Erfindungsgemäß ist daher vorgesehen, dass die Bewegung der gemeinsamen Baugruppe der Scharhubvorrichtung 102 und der Schardruckverstellvorrichtung in einem ersten Bereich derart erfolgt, dass nur der Schardruck der Säschare auf dem Boden über die Schardruckverstellvorrichtung 102 und die gemeinsame Baugruppe verändert wird und in einem zweiten Bereich durch die gemeinsame Baugruppe und die Scharhubvorrichtung 103 ein Ausheben der Säschare aus der Arbeitsstellung 113 in die Transportstellung 111 oder eine Zurückführung aus der Transportstellung 111 in die Arbeitsstellung 113erfolgt.

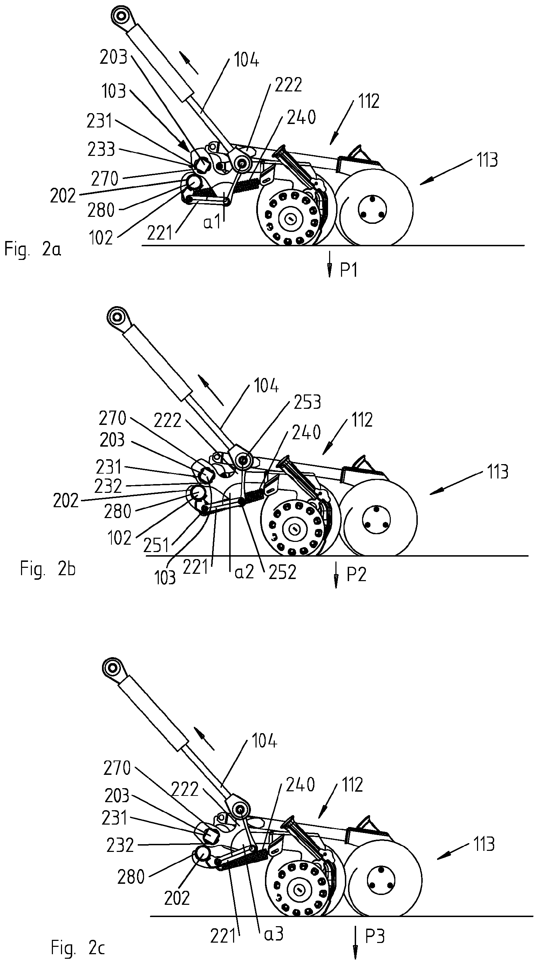

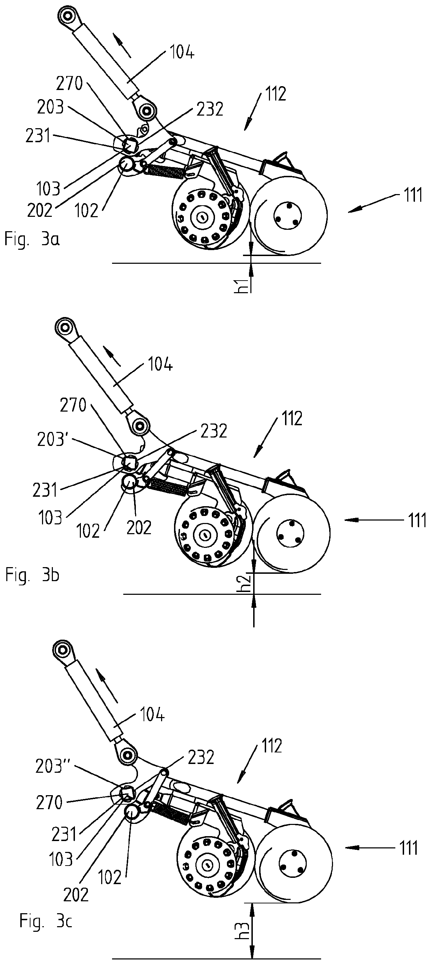

Dieser Bewegungsablauf wird in den Fig. 2a-c und in den Fig. 3a-c dargestellt, wobei in den Fig. 2a-c die Veränderung des Schardrucks beschrieben wird und in den Fig. 3a-c das Ausheben der Säschare aus der Arbeitsstellung 113 in die Transportstellung 111 mittels des Scharträgers durch die Scharhubvorrichtung 103 und die gemeinsame Baugruppe beschrieben werden. Zu diesem Zweck sind in den Figuren 2a-2c und 3a-3c die Schardruckverstellvorrichtung 102 und die Scharhubvorrichtung 103 schematisch dargestellt und die Säschare nur angedeutet.

Fig. 2a zeigt eine Seitenansicht der in Fig. 1 dargestellten Sämaschine, wobei hier nur eine der Säschare 112 dargestellt ist. In der in Fig. 2a dargestellten Situation wird der maximale Schardruck P₁ von der Säschar 112 auf den Boden ausgeübt. Dazu ist der Zylinder 104 der gemeinsamen Baugruppe maximal ausgefahren. Diese maximale Auslenkung kann entweder über einen Anschlag an dem Zylinder festgelegt sein oder, wie hier dargestellt, über die Scharhubvorrichtung 103 definiert werden.

Dabei ist die Scharhubvorrichtung 103 gemäß dieser Ausführungsform so ausgebildet, dass sie zur Veränderung des Schardrucks einen bestimmten Bewegungsbereich des Zylinders 104 erlaubt, ohne dass die Scharhubvorrichtung 103 dabei ihre Position verändert, wodurch die Säschar 112 angehoben werden würde. Dies ist in dieser Ausführungsform dadurch realisiert, dass die Scharhubvorrichtung einen kantigen Balken 203 quer zur Fahrtrichtung umfasst. Dieser kantige Balken umfasst wenigstens zwei Anschläge 231 und 232. Zwischen diesen Anschlägen ist ein mit dem Zylinder 104 und zur gemeinsamen Baugruppe gehörender Verstellhebel 222 bewegbar. Hierbei ist die Ausgestaltung derart, dass bei dem Ausheben der Sächare 112 über die Scharauseinrichtung der Anschlag dann entsprechend anliegt und das Quadratrohr 103 erst dann zum Ausheben der Schare 112 in Position 111 verdreht wird. Der zur Verfügung stehende Winkelbereich ist über den Winkelausschnitt 233 dargestellt, in dem sich ein Mitnehmer 270 des Verstellhebels bewegen kann. Der Verstellhebel 222 kann dabei im Sinne des hier seitlich dargestellten Scharniers ausgebildet sein oder mit einem weiteren Rohr verbunden sein, dessen innere Kontur die Mitnehmer 270 aufweist und die Bewegung in dem dargestellten Winkelbereich 233 zwischen den Anschlägen 231 und 232 ermöglicht, wobei das Rohr konzentrisch um den Balken 203 angeordnet ist. Zur Übertragung der Bewegung des Zylinders 104 ist der Verstellhebel mit einem Abstandshebel 221 verbunden, der wiederum mit der Schardruckverstellvorrichtung verbunden ist. Das Gelenk 220 bestehend aus dem Verstellhebel 222 und dem Abstandshebel 221 sowie der Zylinder 104 bilden in dieser Ausführungsform die der Scharhubvorrichtung und der Schardruckverstellvorrichtung gemeinsame Baugruppe.

Die Schardruckverstellvorrichtung 102 umfasst gemäß dieser Ausführungsform einen ersten Balken 202, der drehbar gelagert ist. Wie dargestellt, ist auch dieser Balken quer zur Fahrtrichtung des Fahrzeugs angeordnet. Vorzugsweise verlaufen sowohl der Balken 203 der Scharhubvorrichtung 103 als auch der Balken 202 der Schardruckverstellvorrichtung 102 parallel zueinander. Der Abstandshebel 221 des Gelenks 220 der gemeinsamen Baugruppe ist mit dem Balken 202 derart verbunden, dass eine Bewegung des Abstandshebels 221 unmittelbar in eine Drehung des Balkens 202 übersetzt wird. Dazu kann vorgesehen sein, dass der Abstandshebel 221 mit dem Balken 102 drehfest über eine geeignete Verbindung, wie beispielsweise über eine Schraubverbindung verbunden ist. Um jedoch ein Auswechseln des Balkens oder des Abstandshebels zu erleichtern, können der Balken und der Abstandshebel auch über Schrauben verbunden werden, die bei Bedarf gelöst werden können. Grundsätzlich wird eine Verbindung derart gewählt, dass der Abstandshebel und der Balken nicht gegeneinander bewegbar sind. Dies ist schematisch durch die Elemente 280 dargestellt.

Der Balken 202 wiederum ist über ein Federelement 240 mit der Säschar 112 verbunden. Wird nun der Zylinder 104 ausgefahren und zwar in dem Bereich, in dem der Verstellhebel im Winkelbereich 233 bewegbar ist, so wird der Balken 202 in Drehung versetzt und das Federelement gespannt, wodurch der Schardruck der Säschar 112 verändert werden kann.

In der in Fig. 2a dargestellten Form ist, wie bereits erwähnt, der Zylinder 104 maximal ausgefahren, wodurch der entstehende Schardruck P₁ der maximale Schardruck ist. Charakteristisch dafür ist auch der Winkel α₁, der von den einzelnen Gelenkpunkten des Gelenks 220 eingeschlossen wird. Diese Gelenkpunkte ergeben sich aus dem Verbindungspunkt 253des Verstellhebels 222 mit dem Zylinder 104, dem Verbindungspunkt 252 des Verstellhebels 222 mit dem Abstandshebel 221 und dem Verbindungspunkt 251 des Abstandshebels 221 mit dem Balken 202. Der Winkel α₁ wird zwischen den Schenkeln von Punkt 253 bis Punkt 252 und Punkt 252 bis Punkt 251 im Punkt 252 eingeschlossen. Je weiter der Zylinder 104 ausgefahren ist, desto größer ist dieser Winkel, wobei der Winkel α₁ den Maximalwert annimmt, wenn der höchste Schardruck P₁ erreicht ist.

In Fig. 2b ist der Zylinder 104 nicht um die maximale Länge ausgefahren. Die Position des Verstellhebels 222 ist jedoch noch so, dass eine Bewegung zwischen den Anschlägen 231 und 232 des Balkens 203 möglich ist. Der Winkel α₂ ist kleiner als in Fig. 2a, da der Zylinder 104 nicht um seine maximale Länge ausgefahren ist. Daraus ergibt sich eine andere Drehstellung des Balkens 202 der Schardruckverstellvorrichtung, was über die Feder eine Übertragung eines geringeren Drucks P₂ auf die Säschar 112 bewirkt. In dieser Stellung wirkt daher ein mittlerer Druck von der Säschar 112 auf den Boden. Wie dargestellt, befinden sich die Mitnehmer 270 des Verstellhebels 222 in einer mittleren Position zwischen den Anschlägen 231 und 232. In dieser Einstellung ist also der Balken 103 von der Bewegung des Zylinders 104 immer noch unbeeinflusst, weshalb die Höhe des Scharbalkens hier nicht beeinflusst wird und der Schardruck sehr genau einstellbar ist.

Fig. 2c zeigt die Säschar 112 bei noch geringerem anliegendem Druck P₃. Der Zylinder 104 ist im Vergleich zur Fig. 2b noch weiter eingefahren, weshalb der Winkel α₃ kleiner als in Fig. 2b ist. Aufgrund der davon abhängenden Stellung des Balkens 202 der Schardruckverstellvorrichtung 102 ergibt sich eine geringere Zugkraft auf das Federelement 240 und damit der geringere Druck P₃. Wie zu erkennen ist, befinden sich die Mitnehmer 270 des Verstellhebels 222 nun nah beim Anschlag 232 des Balkens 203 der Scharhubvorrichtung 103. Auch bis zu diesem Punkt ist bei Veränderung des Schardrucks noch keine Bewegung der Scharhubvorrichtung erfolgt, insbesondere nicht des Balkens 203 (die gemeinsame Baugruppe aus Zylinder 104 und Gelenk 220 hat natürlich eine Bewegung erfahren). Berührt der Mitnehmer 270 in der Darstellung gerade den Anschlag 232, so ist der Schardruck P₃ minimal.

Ein weiteres Einziehen des Zylinders bzw. des Zylinderkolbens aus der in Fig. 2c dargestellten Position würde dazu führen, dass die Mitnehmer 270 gegen den Anschlag 232 laufen, wodurch der Balken 203 der Scharhubvorrichtung 103 aufgrund der auf ihn wirkenden Kraft angehoben werden würde. Eine Einstellung des Schardrucks erfolgt also bis zu diesem Punkt und gegebenenfalls zwischen dem ersten Anschlag 231 und dem Anschlag 232. Je nach Ausbildung des Balkens 203 und Anordnung oder Anzahl der Mitnehmer 270 des Verstellhebels 222 oder eines mit dem Stellhebel fest verbundenen, hier nicht dargestellten Rohrs, kann der maximale Bewegungsraum der Mitnehmer 270 und somit der maximale Bereich, in dem der Schardruck eingestellt werden kann, auf konstruktiv einfache Weise bestimmt werden. Der ausübbare Schardruck bzw. der gesamte Bereich, über den der Schardruck einstellbar ist, ergibt sich somit aus geometrischen Verhältnissen der mechanischen Teile zueinander, was die Steuerung sehr einfach gestaltet.

In den Fig. 3a-c wird der Kolben des Zylinders 104 nun noch weiter eingefahren, was zu einer Bewegung des Balkens 203 führt. In der Fig. 3a wurde der Balken 203 gegenüber der letzten in Fig. 2c dargestellten Anordnung geringfügig bewegt, so dass die Säschar leicht angehoben wurde und zwar um die Höhe h₁. Diese Bewegung kann entweder erreicht werden, indem der Kolben des Zylinders 104 weiter eingefahren wird, verglichen mit Fig. 2c, oder indem der Zylinder als Ganzes entlang der dargestellten Pfeilrichtung bewegt wird. Dazu kann ein beweglicher Rahmen an der Sämaschine vorgesehen sein, den der Zylinder insgesamt bewegen kann.

Die Bewegung des Balkens 203 kann entweder nur in einer Rotation bestehen oder aber in einer horizontalen Ebene und/oder in einer vertikalen Ebene erfolgen. Technisch am Einfachsten umsetzbar ist es, wenn der Balken 203 eine kurvenartige Bewegung durchführt. Das Quadratrohr 203 bewegt sich ebenfalls um die Symmetrieachse des Schardruckrohres 202 und nicht um seine Symmetrieachse.

Zu diesem Zweck liegen die Mitnehmer 270 an dem Anschlag 232 auf. Sofern die Bewegungsrichtung des Kolbens des Zylinders 104 oder des Zylinders beibehalten wird, erfolgt ein Drehen oder Hochziehen des Balkens 203, da die Mitnehmer stets in Anlage mit dem Anschlag 232 gebracht sind.

Fig. 3b zeigt eine Situation, in der die Säschar höher angehoben ist als in der in Fig. 3a dargestellten Situation. Dabei ist der Balken 203' gegenüber dem gestrichelt dargestellten Balken aus der vorherigen Fig. 3a um ein weiteres Stück angehoben bzw. um die Achse des Schardruckrohres 202 gedreht worden. Zu Anschaulichkeitszwecken wird die Position des Balkens in Fig. 3a hier nur als gegenüber dem Balken 203' verdreht dargestellt und nicht auch in vertikaler und horizontaler Richtung versetzt, obwohl eine entsprechende Bewegung zwischen der in Fig. 3a dargestellten Situation und der Situation in Fig. 3b erfolgt sein kann.

Je nach vorgesehener Transportstellung kann die Säschar 112 noch weiter angehoben werden, indem der Kolben weiter eingezogen wird oder der gesamte Zylinder 104 weiter in der dargestellten Pfeilrichtung bewegt wird. Dies führt zwangsläufig zu einer weiteren Bewegung des Balkens 203 in die Position 203", wie dargestellt.

Während der Bewegung des Balkens 203 von der Position, wie sie in Fig. 3a dargestellt ist bis zur Position, wie sie in Fig. 3c dargestellt ist, kann es zu einer weiteren Drehung des in den Fig. 2a-2c dargestellten Balkens 202 der Schardruckverstellvorrichtung kommen. Während also die Verstellung des Schardrucks vorzugsweise ohne Veränderung der Ausrichtung oder Position des Balkens 203 der Scharhubvorrichtung nur durch Bewegung der gemeinsamen Baugruppe und beispielsweise des Balkens 202 der Schardruckverstellvorrichtung 102 bewirkt wird, erfolgt das Überführen der Säschar aus der Arbeitsposition in die Transportstellung zwar auch über die gemeinsame Baugruppe, bestehend beispielsweise aus Zylinder und Gelenk in Verbindung mit dem beispielsweise Balken 203 der Scharhubvorrichtung 103, jedoch kann auch hier eine zumindest teilweise Beteiligung der Schardruckverstellvorrichtung 102 vorliegen.

Wie aus den Fig. 2a-2c und 3a-3c jedoch zu erkennen ist, findet eine Drehung des Balkens 102 der Schardruckverstellvorrichtung 102 vom stärksten Schardruck gemäß Fig. 2a bis zur Überführung der Säschar in die Transportstellung gemäß Fig. 3c immer in dieselbe Richtung statt, so dass eine unbeabsichtigte Verringerung der Höhe beim Anheben der Säschar aus der Arbeitsposition bis in die Transportstellung aufgrund einer Bewegung der Schardruckverstellvorrichtung 102 gemäß Fig. 3a-3c nicht erfolgt.

## Patentansprüche

1. Sämaschine (100) mit einem beweglichen Scharträger (101), an dem eine Vielzahl von Säscharen (112) angeordnet ist, mit einer Schardruckverstellvorrichtung (102) zum Verstellen des Schardrucks der Säschare (112), und mit einer Scharhubvorrichtung (103) zum Ausheben der Säschare aus einer Arbeitsstellung (113) bis in eine Transportstellung (111) mittels des Scharträgers, wobei die Bewegung des Scharträgers (101) zum Einstellen des Schardrucks und der Scharhub durch eine der Schardruckverstellvorrichtung (102) und der Scharhubvorrichtung (103) gemeinsame Baugruppe bewirkt wird, wobei die gemeinsame Baugruppe wenigstens einen Zylinder (104) umfasst, der mit wenigstens je einer Baugruppe der Scharhubvorrichtung (103) und der Schardruckverstellvorrichtung (102) verbunden ist, wobei der Zylinder (104) über ein bewegliches Gelenk (220), umfassend einen Verstellhebel (222) und einen beweglich mit diesem verbundenen Abstandshebel (221), mit der Scharhubvorrichtung (103) und der Schardruckverstellvorrichtung (102) verbunden ist, wobei das Gelenk (220) und der Zylinder (104) die gemeinsame Baugruppe bilden, wobei, dass die Schardruckverstellvorrichtung (102) einen ersten, drehbar gelagerten und quer zur Fahrtrichtung der Sämaschine angeordneten Balken (202) umfasst, an dem mit den Säscharen verbundene Federelemente (240) zur Veränderung des Schardruckes der Säschare (112) angeordnet sind, **dadurch gekennzeichnet dass** die Scharhubvorrichtung (103) einen zweiten Balken (203) umfasst, wobei der zweite Balken (203) beweglich gelagert ist und eine Bewegung des Balkens (203) durch die gemeinsame Baugruppe ein Anheben des Scharträgers bewirken kann, dass das der Verstellhebel (222) des Gelenks (220) drehbar um den zweiten Balken (203) angeordnet ist, wobei der zweite Balken (203) einen Anschlag (232) umfasst, wobei durch eine Bewegung des Gelenks (220) gegen den Anschlag (232) ein Anheben des Scharträgers bewirken kann.

2. Sämaschine (100) nach Anspruch 1, **dadurch gekennzeichnet, dass** der Zylinder (104) als pneumatischer Zylinder, als hydraulischer Zylinder oder als elektrischer Linearmotor ausgebildet ist.

3. Sämaschine nach Anspruch 1, **dadurch gekennzeichnet, dass** der erste Balken (202) mit dem Abstandshebel (221) des Gelenks (220) verbunden ist, wobei eine Bewegung des Gelenks (220) durch den Zylinder (104) eine Veränderung des Schardrucks bewirken kann.

4. Sämaschine nach Anspruch 1, **dadurch gekennzeichnet, dass** der Verstellhebel (222) in einem Bereich um den zweiten Balken (203) zum Einstellen des Schardrucks drehbar ist, wobei eine Begrenzung des Bereichs der Anschlag (232) bildet.

5. Sämaschine nach Anspruch 4, **dadurch gekennzeichnet, dass** der zweite Balken (203) einen zweiten Anschlag (231) umfasst, wobei der Verstellhebel (222) zur Einstellung des Schardrucks zwischen dem Anschlag (232) und dem zweiten Anschlag (231) um den zweiten Balken (203) drehbar ist.

6. Verfahren zum Betreiben einer Sämaschine (100) mit einem beweglichen Scharträger (101), wobei eine Schardruckverstellung mittels einer Schardruckverstellvorrichtung (102) und ein Scharhub aus der Arbeitsstellung (113) der Säschare bis in die Transportstellung (111) mittels einer Scharhubvorrichtung (103) erfolgen, wobei der Scharhub und das Einstellen des Schardrucks durch eine gemeinsame Baugruppe der Schardruckverstellvorrichtung (102) und der Scharhubvorrichtung (103) bewirkt werden, **dadurch gekennzeichnet, dass** die Schardruckverstellvorrichtung (102) eine erste drehbar gelagerte und quer zur Fahrtrichtung der Sämaschine angeordneten Balken (202) umfasst, dass eine Veränderung des Schardrucks durch Drehung eines mit einem Gelenk (220) der gemeinsamen Baugruppe verbundenen ersten Balkens (202) erfolgt, wobei die Drehung des Balkens (202) in eine Veränderung des Schardrucks durch mit den Säscharen (112) verbundene Federelemente (240) überführt wird, dass der Scharhub durch Bewegung eines mit einem Gelenk (220) der gemeinsamen Baugruppe verbundenen zweiten Balkens (203) erfolgt, wobei das Gelenk (220) den zweiten Balken (203) durch Bewegung gegen einen Anschlag (232) des Balkens (203) anhebt.

7. Verfahren nach Anspruch 6, **dadurch gekennzeichnet, dass** bei Veränderung des Schardrucks das Gelenk (220) um einen von dem Anschlag (232) begrenzten Bereich des zweiten Balkens (203) gedreht wird.

8. Verfahren nach Anspruch 7, **dadurch gekennzeichnet, dass** das Gelenk (220) zwischen dem Anschlag (232) und einem zweiten Anschlag (231) des zweiten Balkens (203) drehbar ist, wobei der Schardruck in Abhängigkeit der Position des Gelenks in Relation zum ersten und zweiten Anschlag eingestellt wird.

## Claims

1. Seed drill (100) having a movable coulter carrier (101) on which a multiplicity of sowing coulters (112) are arranged, having a coulter pressure adjustment device (102) for adjusting the coulter pressure of the sowing coulters (112), and having a coulter lifting device (103) for lifting the sowing coulters out of a working position (113) into a transport position (111) by means of the coulter carrier, wherein the movement of the coulter carrier (101) for setting the coulter pressure and the coulter lifting are brought about by a common assembly of the coulter pressure adjustment device (102) and of the coulter lifting device (103), wherein the common assembly comprises at least one cylinder (104) that is connected to at least one assembly each of the coulter lifting device (103) and the coulter pressure adjustment device (102), wherein the cylinder (104) is connected to the coulter lifting device (103) and the coulter pressure adjustment device (102) via a movable joint (220), comprising an adjustment lever (222) and a distance lever (221) connected movably thereto, wherein the joint (220) and the cylinder (104) form the common assembly, wherein the coulter pressure adjustment device (102) comprises a first, rotatably mounted beam (202) which is arranged transversely to the direction of travel of the seed drill and on which spring elements (240), connected to the sowing coulters, for changing the coulter pressure of the sowing coulters (112) are arranged, **characterized in that** the coulter lifting device (103) comprises a second beam (203), wherein the second beam (203) is mounted in a movable manner and the beam (203) being moved by the common assembly can bring about lifting of the coulter carrier, **in that** the adjusting lever (222) of the joint (220) is arranged so as to be rotatable about the second beam (203), wherein the second beam (203) comprises a stop (232), wherein the joint (220) moving against the stop (232) can bring about lifting of the coulter carrier.

2. Seed drill (100) according to Claim 1, **characterized in that** the cylinder (104) is in the form of a pneumatic cylinder, of a hydraulic cylinder or of an electric linear motor.

3. Seed drill according to Claim 1, **characterized in that** the first beam (202) is connected to the distance lever (221) of the joint (220), wherein the joint (220) being moved by the cylinder (104) can bring about a change in the coulter pressure.

4. Seed drill according to Claim 1, **characterized in that** the adjusting lever (222) is rotatable in a zone about the second beam (203) in order to set the coulter pressure, wherein the stop (232) forms a limit of the zone.

5. Seed drill according to Claim 4, **characterized in that** the second beam (203) comprises a second stop (231), wherein the adjusting lever (222) is rotatable about the second beam (203) between the stop (232) and the second stop (231) in order to set the coulter pressure.

6. Method for operating a seed drill (100) having a movable coulter carrier (101), wherein coulter pressure adjustment is effected by means of a coulter pressure adjustment device (102) and coulter lifting out of the working position (113) of the sowing coulters into the transport position (111) is effected by means of a coulter lifting device (103), wherein the coulter lifting and the setting of the coulter pressure are brought about by a common assembly of the coulter pressure adjustment device (102) and of the coulter lifting device (103), **characterized in that** the coulter pressure adjustment device (102) comprises a first, rotatably mounted beam (202) arranged transversely to the direction of travel of the seed drill, **in that** a change to the coulter pressure is effected by rotation of a first beam (202) connected to a joint (220) of the common assembly, wherein the rotation of the beam (202) is converted into a change in the coulter pressure by spring elements (240) connected to the sowing coulters (112), **in that** the coulter lifting is effected by a second beam (203) connected to a joint (220) of the common assembly being moved, wherein the joint (220) lifts the second beam (203) by moving against a stop (232) of the beam (203).

7. Method according to Claim 6, **characterized in that** when the coulter pressure is changed, the joint (220) is rotated about a zone of the second beam (203) that is limited by the stop (232).

8. Method according to Claim 7, **characterized in that** the joint (220) is rotatable between the stop (232) and a second stop (231) of the second beam (203), wherein the coulter pressure is set depending on the position of the joint in relation to the first and second stop.

## Revendications

1. Semoir (100) comprenant un support de socs mobile (101) sur lequel une pluralité de socs (112) est disposée, un dispositif de réglage de pression de socs (102) destiné à régler la pression des socs d'ensemencement (112), et un dispositif de soulèvement de socs (103) destiné à soulever les socs d'une position de travail (113) à une position de transport (111) à l'aide du support de socs, le mouvement du support de socs (101) étant effectué par un ensemble commun au dispositif de réglage de pression de socs (102) et au dispositif de soulèvement de socs (103) afin de régler la pression des soc et le soulèvement des socs, l'ensemble commun comprenant au moins un cylindre (104) qui est relié à au moins un ensemble du dispositif de soulèvement de socs (103) et du dispositif de réglage de pression de socs (102), le cylindre (104) étant relié au dispositif de soulèvement de socs (103) et au dispositif de réglage de pression de socs (102) par le biais d'une articulation mobile (220) comprenant un levier de réglage (222) et un levier d'espacement (221) reliés de manière mobile à celui-ci, l'articulation (220) et le cylindre (104) formant l'ensemble commun, le dispositif de réglage de pression de socs (102) comprenant une première poutre (202) qui est montée à rotation, qui est disposée transversalement à la direction de déplacement du semoir et sur laquelle sont disposés des éléments à ressort (240) reliés aux socs d'ensemencement pour modifier la pression des socs d'ensemencement (112), **caractérisé en ce que** le dispositif de soulèvement de socs (103) comprend une deuxième poutre (203),
la deuxième poutre (203) étant montée de manière mobile et un mouvement de la poutre (203) pouvant provoquer par le biais de l'ensemble commun un soulèvement du support de socs, **en ce que** le levier de réglage (222) de l'articulation (220) est agencé de manière à pouvoir tourner autour de la deuxième poutre (203), la deuxième poutre (203) comprenant une butée (232), un déplacement de l'articulation (220) contre la butée (232) pouvant provoquer le soulèvement du support de socs.

2. Semoir (100) selon la revendication 1, **caractérisé en ce que** le cylindre (104) est réalisé sous la forme d'un cylindre pneumatique, d'un cylindre hydraulique ou d'un moteur linéaire électrique.

3. Semoir selon la revendication 1, **caractérisé en ce que** la première poutre (202) est reliée au levier d'espacement (221) de l'articulation (220), le mouvement de l'articulation (220) à travers le cylindre (104) pouvant provoquer une variation de la pression des socs.

4. Semoir selon la revendication 1, **caractérisé en ce que** le levier de réglage (222) peut tourner dans une zone autour de la deuxième poutre (203) afin de régler la pression des socs, la butée (232) formant une limitation de la zone.

5. Semoir selon la revendication 4, **caractérisé en ce que** la deuxième poutre (203) comprend une deuxième butée (231), le levier de réglage (222) pouvant tourner autour de la deuxième poutre (203) afin de régler la pression des socs entre la butée (232) et la deuxième butée (231).

6. Procédé de fonctionnement d'un semoir (100) muni d'un support de socs mobile (101), un réglage de la pression des socs étant effectué au moyen d'un dispositif de réglage de pression de socs (102) et un soulèvement des socs de la position de travail (113) des socs d'ensemencement à la position de transport (111) étant effectué au moyen d'un dispositif de soulèvement de socs (103), le soulèvement des socs et le réglage de la pression des socs étant provoqués par un ensemble commun du dispositif de réglage de pression de socs (102) et du dispositif de soulèvement de socs (103), **caractérisé en ce que** le dispositif de réglage de pression de socs (102) comprend une première poutre (202) qui est montée à rotation et qui est disposée transversalement à la direction de déplacement du semoir d'ensemencement, **en ce que** la pression des socs est modifiée par la rotation d'une première poutre (202) reliée à une articulation (220) de l'ensemble commun, la rotation de la poutre (202) étant convertie en une variation de la pression des socs par des éléments à ressort (240) reliés aux socs d'ensemencement (112), **en ce que** le soulèvement des socs est effectué par déplacement d'une deuxième poutre (203) reliée à une articulation (220) de l'ensemble commun, l'articulation (220) soulevant la deuxième poutre (203) par déplacement contre une butée (232) de la poutre (203).

7. Procédé selon la revendication 6, **caractérisé en ce que**, lorsque la pression des socs varie, l'articulation (220) tourne autour d'une zone de la deuxième poutre (203) qui est délimitée par la butée (232) .

8. Procédé selon la revendication 7, **caractérisé en ce que** l'articulation (220) peut tourner entre la butée (232) et une deuxième butée (231) de la deuxième poutre (203), la pression des socs étant réglée en fonction de la position de l'articulation par rapport aux première et deuxième butées.
